# EUROPÄISCHE PATENTANMELDUNG

(11) **EP 3 862 821 A1**
(43) Veröffentlichungstag der Anmeldung: **11.08.2021**
(21) Anmeldenummer: 20155319.5
(22) Anmeldetag: 04.02.2020
(51) Int. Cl.: G05B 15/02, G05B 23/02

(54) **VERFAHREN UND VORRICHTUNG ZUM ERSTELLEN EINES MODELLS ZUR VERWENDUNG IN EINEM PRÜFABLAUF FÜR EIN EINSTIEGSSYSTEM FÜR EIN FAHRZEUG**

(71) Anmelder: Knorr-Bremse Gesellschaft mit beschränkter Haftung, 2340 Mödling (AT)
(72) Erfinder: BRAMAUER, Johann, 3341 Ybbsitz (AT); EKKER, Reinhard, 3270 Scheibbs (AT)
(74) Vertreter: Aurigium Leischner & Luthe

(57) **Zusammenfassung**

Es wird ein Verfahren zum Erstellen eines individuellen Modells (105) , zur Verwendung in einem Prüfablauf für ein Einstiegssystem (110) für ein Fahrzeug (115), z.B. ein Schienenfahrzeug, wobei das Modell z.B. eine Nominalkurve umfasst, welche einen Normalzustand des Einstiegssystems beschreibt. Durch das Erzeugen dieses individuellen Modells für das Einstiegssystem können bei einer späteren Beurteilung bzw. Überprüfung eines aktuellen Zustands des Einstiegssystems genauere Aussagen getroffen werden als beispielsweise unter Verwendung eines generisch an einem Musterprüfstand aufgenommenen Modells. Das Verfahren umfasst einen Schritt des Einlesens und/oder einen Schritt des Empfangens und einen Schritt des Erzeugens. Im Schritt des Einlesens wird ein Umfeldsignal (130) eingelesen, das eine Information über ein Umfeld des Einstiegssystems (110) repräsentiert. Im Schritt des Empfangens wird ein Prozesssignal (135) empfangen, das eine während eines Betriebs des Einstiegssystems (110) generierte Prozessinformation des Einstiegssystems (110) repräsentiert. Im Schritt des Erzeugens wird das Modell (105) unter Verwendung des Umfeldsignals (130) und/oder Prozesssignals (135) erzeugt.

## Beschreibung

Der vorliegende Ansatz bezieht sich auf ein Verfahren und eine Vorrichtung zum Erstellen eines Modells zur Verwendung in einem Prüfablauf für ein Einstiegssystem für ein Fahrzeug.

Eine Überprüfung von Einstiegssystemen eines Fahrzeugs wird üblicherweise laut vorgegebenem Wartungsplan manuell ohne eine Aufzeichnung von Daten ausgeführt. Vor einer Inbetriebnahme werden bereits in manchen Projekten sogenannte "Burn-in"-Tests durchgeführt, d. h., das Einstiegssystem absolviert eine im Vorfeld definierte Anzahl an Schließ- und Öffnungszyklen, um so etwaige Fehler zu erkennen. Eine damit verbunden Aufzeichnung von Prozess- und Umfelddaten findet allerdings bisher nicht statt. Aktuell erfolgt eine Datenaufzeichnung bei Einstiegssystemen während der gesamten Betriebszeit.

Vor diesem Hintergrund ist es die Aufgabe des vorliegenden Ansatzes ein verbessertes Verfahren zum Erstellen eines Modells zur Verwendung in einem Prüfablauf für ein Einstiegssystem für ein Fahrzeug und eine verbesserte Vorrichtung zum Erstellen eines Modells zur Verwendung in einem Prüfablauf für ein Einstiegssystem für ein Fahrzeug zu schaffen.

Diese Aufgabe wird durch ein Verfahren mit den Schritten des Verfahrensanspruchs 1, durch eine Vorrichtung nach Anspruch 8 und durch ein Computerprogramm nach Anspruch 9 gelöst.

Die mit dem vorgestellten Ansatz erreichbaren Vorteile bestehen darin, dass für ein Einstiegssystem ein individuelles Modell geschaffen wird, welches einen Normalzustand des Einstiegssystems beschreibt. Ein späterer Prüflauf des Einstiegssystems zur Feststellung eines Zustands des Einstiegssystems kann unter Verwendung dieses individuellen Modells besonders genaue Prüfergebnisse liefern.

Ein Verfahren zum Erstellen eines Modells zur Verwendung in einem Prüfablauf für ein Einstiegssystem für ein Fahrzeug umfasst einen Schritt des Einlesens und zusätzlich oder alternativ einen Schritt des Empfangens und einen Schritt des Erzeugens. Im Schritt des Einlesens wird ein Umfeldsignal eingelesen, das eine Information über ein Umfeld des Einstiegssystems repräsentiert. Im Schritt des Empfangens wird ein Prozesssignal empfangen, das eine während eines Betriebs des Einstiegssystems generierte Prozessinformation des Einstiegssystems repräsentiert. Im Schritt des Erzeugens wird das Modell unter Verwendung des Umfeldsignals und zusätzlich oder alternativ Prozesssignals erzeugt.

Dieses Verfahren kann beispielsweise in Software oder Hardware oder in einer Mischform aus Software und Hardware beispielsweise in einem Steuergerät implementiert sein.

Bei dem Einstiegssystem kann es sich um ein Türsystem handeln, welches elektronisch geöffnet und zusätzlich oder alternativ elektronisch geschlossen werden kann. Das Einstiegssystem kann zum Ein- und Aussteigen von Personen in das oder aus dem Fahrzeug dienen, welches beispielsweise ein Schienenfahrzeug sein kann. Das Fahrzeug kann auch mehrere solcher Einstiegssysteme aufweisen, wobei jedes der Einstiegssysteme ein eigenes Türsteuergerät aufweisen kann. Das Umfeldsignal kann eine Information über ein aktuelles oder definiertes Umfeld des Einstiegssystems repräsentieren. Beispielsweise kann das Umfeldsignal eine Information über eine Umfeldbedingung wie einen Aufenthaltsort des Einstiegssystems repräsentieren. Das Umfeldsignal kann von einem Umfeldsensor oder einer Eingabeeinrichtung zur manuellen Eingabe der Information eingelesen werden. Das Prozesssignal kann zumindest eine während eines Belastbarkeitstests, auch "Burn-in-Test" genannt, des Einstiegssystems generierte Prozessinformation des Einstiegssystems umfassen. Zusätzlich oder alternativ kann das Prozesssignal eine während eines regulären Betriebs des Einstiegssystems generierte Prozessinformation des Einstiegssystems umfassen. Bei dem Modell kann es sich um eine Nominalkurve handeln, oder das Modell kann eine solche Nominalkurve umfassen, welche einen Normalzustand des Einstiegssystems beschreibt. Durch das Erzeugen dieses individuellen Modells für das Einstiegssystem können bei einer späteren Beurteilung eines aktuellen Zustands des Einstiegssystems genauere Aussagen getroffen werden als beispielsweise unter Verwendung eines generisch an einem Musterprüfstand aufgenommenen Modells/Nominalkurve.

Es ist weiterhin von Vorteil, wenn das Verfahren gemäß einer Ausführungsform einen Schritt des Durchführens aufweist, in dem der Prüflauf des Einstiegssystems unter Verwendung des im Schritt des Erzeugens erzeugten Modells durchgeführt wird, um ein Prüfergebnis zu erhalten. Bei dem Prüflauf oder auch Prüfablauf kann es sich um ein Prüfverfahren an dem Einstiegssystem zur Vorhersage des Zustands des Einstiegssystems handeln. Bei diesem Prüfverfahren können beispielsweise Überprüfungen/Verschleißmessungen an dem Einstiegssystem vorgenommen werden, um erkennen zu können, ob Instandhaltemaßnahmen notwendig sind. Ein solches Verfahren wird englisch auch als "Condition based Maintenance", kurz "CBM", oder "Predicitive Maintenance" bezeichnet. Der Schritt des Durchführens ermöglicht es nun vorteilhafterweise, ein besonders aussagekräftiges Prüfergebnis zu erhalten, da es den individuellen Normalzustand des Einstiegssystems berücksichtigt.

Das Verfahren kann auch einen Schritt des Vergleichens umfassen, in dem das Prüfergebnis mit einem Referenzprüfergebnis verglichen wird, das anhand eines durchgeführten Referenzprüfablaufs unter Verwendung eines Referenzmodells erhalten wurde, das unter Verwendung eines Referenzumfeldsignals und zusätzlich oder alternativ eines Referenzprozesssignals und eines Referenzeinstiegssystems und zusätzlich oder alternativ Prozess- und Umfeldsignalen aus dem Betrieb erzeugt wurde. Das Referenzmodell kann zuvor mit dem Referenzeinstiegssystems an einem Musterprüfstand identisch wie das Modell erzeugt worden sein. Das Referenzprüfergebnis kann dazu dienen, um Anomalien festzustellen.

Gemäß einer Ausführungsform kann das Verfahren ferner einen Schritt des Ausgebens aufweisen, in dem ein Abweichungssignal an eine Kommunikationsschnittstelle zu einem Prüfer ausgegeben wird, wobei das Abweichungssignal dazu ausgebildet ist, um eine Abweichung zwischen dem Referenzeinstiegssystem und dem Einstiegssystem anzuzeigen, wenn im Schritt des Vergleichens das Prüfergebnis und das Referenzprüfergebnis nicht innerhalb eines Toleranzbereichs übereinstimmen. Ein solches Abweichungssignal kann den Prüfer auf eine notwendige Korrektur an dem Einstiegssystem aufmerksam machen.

Die Schritte des Einlesens und zusätzlich oder alternativ Empfangens und Erzeugens können in einem vorbestimmten zeitlichen Intervall automatisch wiederholt werden. Dies ermöglicht ein stets aktuelles Modell.

Es ist weiterhin von Vorteil, wenn das Verfahren gemäß einer Ausführungsform einen Schritt des Generierens vor dem Schritt des Einlesens aufweist, wobei im Schritt des Generierens das Prozesssignal unter Verwendung von gespeicherten Prozessinformationen generiert wird, die während eines Betriebs des Einstiegssystems in einem definierten Umfeld sensierte und gespeicherte Prozessinformationen repräsentieren. So kann das Prozesssignal generiert und für den Schritt des Erzeugens bereitgestellt werden.

Das Verfahren kann auch einen Schritt des Speicherns vor dem Schritt des Generierens aufweisen, wobei im Schritt des Speicherns sensierte Prozessinformationen während des Betriebs des Einstiegssystems in dem definierten Umfeld des Einstiegssystems auf einer nicht flüchtigen Speichereinrichtung gespeichert werden. Dies ermöglicht ein Sammeln von Prozessdaten zur späteren Auswertung sowie auch zur Erzeugung des Modells.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante des Ansatzes in Form einer Vorrichtung kann die dem Ansatz zugrunde liegende Aufgabe schnell und effizient gelöst werden.

Hierzu kann die Vorrichtung zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

In einer vorteilhaften Ausgestaltung erfolgt durch die Vorrichtung eine Steuerung eines Verfahrens zum Erstellen eines Modells zur Verwendung in einem Prüfablauf für ein Einstiegssystem für ein Fahrzeug. Hierzu kann die Vorrichtung beispielsweise auf Sensorsignale wie ein Umfeldsignal, das eine Information über ein Umfeld des Einstiegssystems repräsentiert und zusätzlich oder alternativ auf ein Prozesssignal, das eine während eines Betriebs des Einstiegssystems generierte Prozessinformation des Einstiegssystems repräsentiert, zugreifen. Die Ansteuerung erfolgt über Aktoren wie eine Einleseeinrichtung, die dazu ausgebildet ist, um das Umfeldsignal einzulesen und zusätzlich oder alternativ das Prozesssignal zu empfangen und eine Erzeugungseinrichtung, die dazu ausgebildet ist, um das Modell unter Verwendung des Umfeldsignals und zusätzlich oder alternativ des Prozesssignals zu erzeugen.

Ausführungsbeispiele des hier vorgestellten Ansatzes werden in der nachfolgenden Beschreibung mit Bezug zu den Figuren näher erläutert. Es zeigen:
Fig. 1 eine schematische Darstellung einer Vorrichtung zum Erstellen eines Modells zur Verwendung in einem Prüfablauf für ein Einstiegssystem für ein Fahrzeug gemäß einem Ausführungsbeispiel; und
Fig. 2 ein Ablaufdiagramm eines Verfahrens zum Erstellen eines Modells zur Verwendung in einem Prüfablauf für ein Einstiegssystem für ein Fahrzeug gemäß einem Ausführungsbeispiel.

In der nachfolgenden Beschreibung günstiger Ausführungsbeispiele des vorliegenden Ansatzes werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

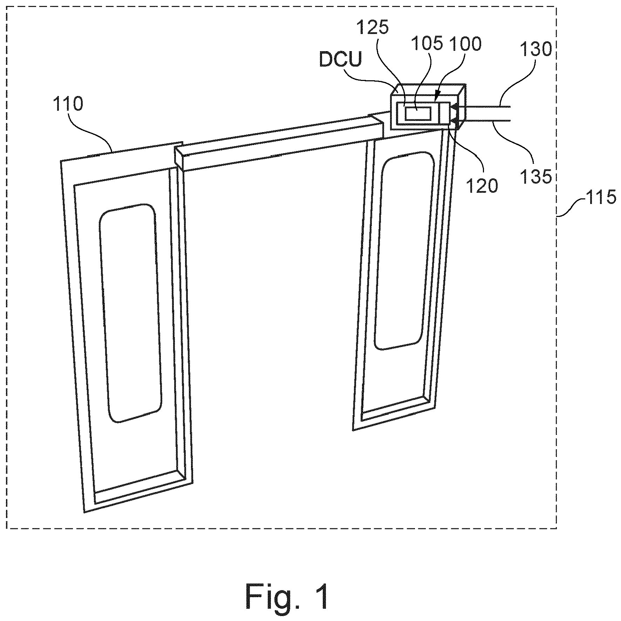

**Fig. 1** zeigt eine schematische Darstellung einer Vorrichtung 100 zum Erstellen eines Modells 105 zur Verwendung in einem Prüfablauf für ein Einstiegssystem 110 für ein Fahrzeug 115 gemäß einem Ausführungsbeispiel.

Die Vorrichtung 100 weist eine Einleseeinrichtung 120 und eine Erzeugungseinrichtung 125 auf. Die Einleseeinrichtung 120 ist dazu ausgebildet, um ein Umfeldsignal 130 eingelesen, das eine Information über ein Umfeld des Einstiegssystems 110 repräsentiert. Die Einleseeinrichtung 120 ist zusätzlich oder alternativ gemäß diesem Ausführungsbeispiel dazu ausgebildet, um ein Prozesssignal 135 zu empfangen, das eine während eines Betriebs des Einstiegssystems 110 generierte Prozessinformation des Einstiegssystems 110 repräsentiert. Die Erzeugungseinrichtung 125 ist dazu ausgebildet, um das Modell 105 unter Verwendung des Umfeldsignals 130 und/oder Prozesssignals 135 zu erzeugen.

Gemäß einem alternativen Ausführungsbeispiel weist die Vorrichtung 100 ferner eine eigens zum Empfangen des Prozesssignals 135 ausgebildete Empfangseinrichtung auf. Gemäß einem alternativen Ausführungsbeispiel handelt es sich bei dem Einstiegssystem 110 um ein beliebiges anderes System mit einer Steuerungselektronik, wobei die Vorrichtung 100 der vorangehenden Beschreibung entsprechend zum Erstellen eines Modells zur Verwendung in einem Prüfablauf für dieses System ausgebildet ist. Das Fahrzeug 115 ist gemäß diesem Ausführungsbeispiel als ein Schienenfahrzeug ausgeführt. Gemäß einem alternativen Ausführungsbeispiel kann es sich bei dem Fahrzeug 115 um einen Lastkraftwagen oder Personenkraftwagen handeln. Bei dem Einstiegssystem 110 handelt es sich gemäß diesem Ausführungsbeispiel um ein Türsystem, welches elektronisch geöffnet und/oder elektronisch geschlossen werden kann. Hierzu weist das Einstiegssystem 110 gemäß diesem Ausführungsbeispiel ein Türsteuergerät DCU auf, in dem gemäß diesem Ausführungsbeispiel die Vorrichtung 100 angeordnet oder implementiert ist. Eine Anordnung der Vorrichtung 100 oder einzelner Einrichtungen 120, 125 der Vorrichtung 100 kann von der hier dargestellten Anordnung abweichen. Gemäß einem Ausführungsbeispiel weist das Fahrzeug 115 mehrere Einstiegssysteme 110 auf, wobei gemäß einem Ausführungsbeispiel jedes der Einstiegssysteme 110 ein eigenes Türsteuergerät DCU und/oder eine eigene der vorangehend beschriebenen Vorrichtungen 100 aufweist.

Das Umfeldsignal 130 repräsentiert gemäß diesem Ausführungsbeispiel eine Information über ein aktuelles oder definiertes Umfeld des Einstiegssystems 110. Gemäß einem Ausführungsbeispiel umfasst das Umfeldsignal 130 eine Information über eine Umfeldbedingung wie einen Aufenthaltsort des Einstiegssystems 110. Gemäß einem Ausführungsbeispiel wird das Umfeldsignal 130 von einem Umfeldsensor oder einer Eingabeeinrichtung zur manuellen Eingabe der Information eingelesen. Das Prozesssignal 135 umfasst gemäß diesem Ausführungsbeispiel zumindest eine während eines Belastbarkeitstests, auch "Burn-in-Test" genannt, des Einstiegssystems 110 generierte Prozessinformation des Einstiegssystems 110. Zusätzlich oder alternativ umfasst das Prozesssignal 135 gemäß einem Ausführungsbeispiel eine während eines regulären Betriebs des Einstiegssystems 110 generierte Prozessinformation des Einstiegssystems 110. Das Modell 105 weist gemäß einem Ausführungsbeispiel eine Nominalkurve auf, welche einen Normalzustand des Einstiegssystems beschreibt.

Die Vorrichtung 100 weist ferner gemäß diesem Ausführungsbeispiel eine Durchführeinrichtung, eine Vergleichseinrichtung, eine Ausgabeeinrichtung, eine Generiereinrichtung und/oder eine Speichereinrichtung auf.

Die Durchführeinrichtung ist dazu ausgebildet, um den Prüflauf des Einstiegssystems 110 unter Verwendung des von der Erzeugungseinrichtung 125 erzeugten Modells 105 durchzuführen, um ein Prüfergebnis zu erhalten. Bei dem Prüflauf handelt es sich gemäß diesem Ausführungsbeispiel um ein Prüfverfahren an dem Einstiegssystem 110 zur Vorhersage des Zustands des Einstiegssystems 110. Hierbei werden gemäß einem Ausführungsbeispiel automatisch und/oder manuell Überprüfungen und/oder Verschleißmessungen an dem Einstiegssystem 110 durchgeführt oder bewirkt, um erkennbar zu machen, ob Instandhaltemaßnahmen notwendig sind. Die Vergleichseinrichtung ist dazu ausgebildet, um das Prüfergebnis mit einem Referenzprüfergebnis zu vergleichen, das anhand eines durchgeführten Referenzprüfablaufs unter Verwendung eines Referenzmodells erhalten wurde, das unter Verwendung eines Referenzumfeldsignals und/oder eines Referenzprozesssignals und eines Referenzeinstiegssystems und/oder Prozess- und Umfeldsignalen aus dem Betrieb erzeugt wurde. Die Ausgabeeinrichtung ist dazu ausgebildet, um ein Abweichungssignal an eine Kommunikationsschnittstelle zu einem Prüfer auszugeben, wobei das Abweichungssignal dazu ausgebildet ist, um eine Abweichung zwischen dem Referenzeinstiegssystem und dem Einstiegssystem 110 anzuzeigen, wenn das Prüfergebnis und das Referenzprüfergebnis nicht innerhalb eines Toleranzbereichs übereinstimmen. Die Generiereinrichtung ist dazu ausgebildet, um das Prozesssignal 135 unter Verwendung von gespeicherten Prozessinformationen zu generieren, die während eines Betriebs des Einstiegssystems 110 in einem definierten Umfeld sensierte und gespeicherte Prozessinformationen repräsentieren. Die Speichereinrichtung ist als eine nicht flüchtige Speichereinrichtung ausgeformt und dazu ausgebildet, um sensierte Prozessinformationen während des Betriebs des Einstiegssystems 110 in dem definierten Umfeld des Einstiegssystems 110 zu speichern. Die Durchführeinrichtung Vergleichseinrichtung, Ausgabeeinrichtung, Speichereinrichtung und/oder Generiereinrichtung sind gemäß einem Ausführungsbeispiel in das Türsteuergerät DCU und/oder in beliebiger Kombination in einer von dem Fahrzeug 115 extern angeordnete Einrichtung, beispielsweise in einem Server, implementiert.

Die hier vorgestellte Vorrichtung 100 ist zur Durchführung eines automatisierten Testablaufs inklusive Datenaufzeichnung (Burn-in Test) ausgebildet. Die Vorrichtung 100 dient hierbei einer Vorhersage eines Zustandes eines Systems, hier des Einstiegssystems 110, oder einer Komponente. Ein Prüfverfahren für eine solche Vorhersage wird englisch auch als "Condition based Maintenance", kurz "CBM", oder "Predicitive Maintenance" bezeichnet. Eine Erstellung von Nominalkurven oder Modellen 105, welche einen Normalzustand des jeweiligen Einstiegssystems 110 abbilden, erweist sich im Betrieb aufgrund wechselnder und teilweise nicht bekannter Umfeldeinflüsse als schwierig. Jedes Einstiegssystem 110 verhält sich aufgrund vorhandener Einbau-/Einstelltoleranzen unterschiedlich, aus diesem Grund sind unter definierten Umfeldbedingungen an einem Musterstand aufgenommene Nominalkurven/Modelle nicht ohne Weiteres auf alle Einstiegssysteme dieser Bauart im Feld anwendbar. Die hier vorgestellte Vorrichtung 100 ermöglicht nun vorteilhafterweise eine Bereitstellung von Prozess- und Umfelddaten unter definierten Bedingungen, um Nominalkurven/Modelle 105 für den Normalzustand eines Systems individuell je System zu erhalten. Hierbei erfolgt gemäß einem Ausführungsbeispiel ein regelmäßiger Abgleich der Modelle 105 mit identisch erzeugten Daten, um Anomalien zu erkennen.

Die Vorrichtung 100 realisiert gemäß diesem Ausführungsbeispiel eine Implementierung einer definierten Ablaufsequenz in eine Software des Türsteuergeräts DCU, kombiniert mit gemäß diesem Ausführungsbeispiel einer Aufzeichnung aller vorhandenen Prozess- und Umfelddaten und/oder einer Übertragung dieser an eine Infrastruktur zur Auswertung. Gemäß einem Ausführungsbeispiel erfolgt eine Durchführung der Ablaufsequenz unter Verwendung der Vorrichtung 100 erstmalig nach einem Einbau des Türsystems ins Fahrzeug 115. Dies ermöglicht durch die Datenaufzeichnung die Erstellung der Nominalkurven/Modelle 105 für den Normalzustand des jeweiligen Systems 110. Gemäß einem Ausführungsbeispiel werden parallel die so entstanden Informationen mit dem Referenzmodell, welches an einem Musterstand erzeugt wurde, abgeglichen, um etwaige Einbau-/Einstellfehler frühzeitig zu erkennen. Die Ablaufsequenz kann zu definierten Zeitpunkten entweder manuell angestoßen werden, oder es wird gemäß einem Ausführungsbeispiel ein automatisierter Aufruf der Sequenz zu definierten Zeitpunkten von der Vorrichtung 100 bewirkt, um Prozess- und Umfelddaten zu erzeugen, welche für einen Abgleich mit den erzeugten Nominalkurven/Modellen 105 für den Normalzustand dienen. Dies ermöglich die Erkennung von Anomalien sowie schleichenden Veränderungen und somit die Vorhersage von Fehlern und Verschleißzuständen des Systems 110. Gemäß diesem Ausführungsbeispiel ist die Vorrichtung 100 dazu ausgebildet, um eine automatische Durchführung von Prüfsequenzen an definierten Orten, beispielsweise einem Depot und/oder einer Werkstatt, zu bewirken, um wechselnde Umfeldbedingungen auszuschließen, kombiniert mit einer Aufzeichnung aller Prozess- und Umfelddaten. Je Einstiegssystem 110 stehen so individuelle Nominalkurven/Modelle 105 für den Normalzustand zur Verfügung und der aktuelle Zustand des Systems 110 wird gemäß einem Ausführungsbeispiel regelmäßig unter identischen Umfeldbedingungen mit diesen abgeglichen. Dies ermöglicht eine höhere Prognosegüte bei der Vorhersage von Fehlern und/oder Verschleiß. Durch den Abgleich der individuellen Nominalkurven/Modelle 105 für den Normalzustand mit an einem Musterstand erstellten Referenznominalkurven/Referenzmodellen können Einbau-/Einstellfehler einzelner Systeme 110 frühzeitig erkannt und behoben werden.

Es folgt die Beschreibung eines Anwendungsbeispiels der hier vorgestellten Vorrichtung 100: Es erfolgt die Erstellung von Referenzkurven/-modellen an einem Musterstand einer in einem Projekt verwendeten Einstiegssystem-Serie. Im Folgenden erfolgt ein Einbau der Einstiegssysteme 110 in das Fahrzeug 105. Danach folgt unter Verwendung der Vorrichtung 100 ein Start der definierten Ablaufsequenz inklusive Datenaufzeichnung unter definierten Umfeldbedingungen (Werkstatt, Depot, etc.). Es folgt die Erstellung von Nominalkurven/Modellen 105 für den Normalzustand je Einstiegssystem 110. Ferner wird ein Abgleich der ermittelten Informationen mit jenen des Musterstands durchgeführt, um etwaige Einbau-/Einstellfehler zu identifizieren. Gegebenenfalls erfolgt eine Korrektur der gefundenen Einbau-/Einstellmängel und anschließend eine erneute Durchführung der Ablaufsequenz und Erstellung von Nominalkurven/Modellen 105 für den Normalzustand der korrigierten Systeme 110.

Regelmäßig wird die Ablaufsequenz gestartet, manuell oder auch automatisch, beispielsweise zu definierten Zeiten nachts, um gesammelte Daten mit den Ausgangswerten zu vergleichen und so Abweichungen oder schleichende Veränderungen zu erkennen.

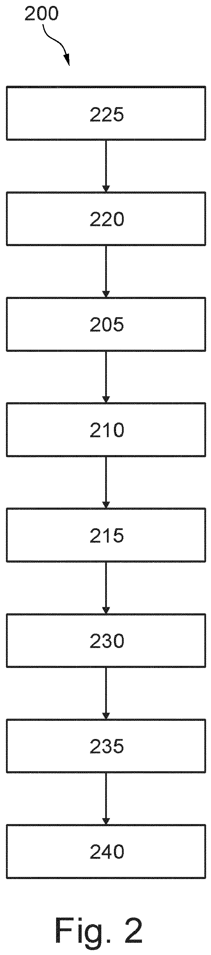

**Fig. 2** zeigt ein Ablaufdiagramm eines Verfahrens 200 zum Erstellen eines Modells zur Verwendung in einem Prüfablauf für ein Einstiegssystem für ein Fahrzeug gemäß einem Ausführungsbeispiel. Dieses Verfahren 200 ist von der in Fig. 1 beschriebenen Vorrichtung durchführbar und/oder ansteuerbar.

Das Verfahren 200 umfasst einen Schritt 205 des Einlesens und/oder einen Schritt 210 des Empfangens und einen Schritt 215 des Erzeugens. Im Schritt 205 des Einlesens wird ein Umfeldsignal eingelesen, das eine Information über ein Umfeld des Einstiegssystems repräsentiert. Im zusätzlichen oder alternativen Schritt 210 des Empfangens wird ein Prozesssignal empfangen, das eine während eines Betriebs des Einstiegssystems generierte Prozessinformation des Einstiegssystems repräsentiert. Im Schritt 215 des Erzeugens wird das Modell unter Verwendung des Umfeldsignals und/oder Prozesssignals erzeugt.

Optional umfasst das Verfahren 200 gemäß diesem Ausführungsbeispiel weiterhin einen Schritt 220 des Generierens, einen Schritt 225 des Speicherns, einen Schritt 230 des Durchführens, einen Schritt 235 des Vergleichens und/oder einen Schritt 240 des Ausgebens.

Im Schritt 220 des Generierens wird vor dem Schritt 210 des Empfangens das Prozesssignal unter Verwendung von gespeicherten Prozessinformationen generiert, die während eines Betriebs des Einstiegssystems in einem definierten Umfeld sensierte und gespeicherte Prozessinformationen repräsentieren. Im Schritt 225 des Speicherns werden vor dem Schritt 220 des Generierens sensierte Prozessinformationen während des Betriebs des Einstiegssystems in dem definierten Umfeld des Einstiegssystems auf einer nicht flüchtigen Speichereinrichtung gespeichert. Im Schritt 230 des Durchführens wird der Prüflauf des Einstiegssystems unter Verwendung des im Schritt 215 des Erzeugens erzeugten Modells durchgeführt, um ein Prüfergebnis zu erhalten. Im Schritt 235 des Vergleichens wird das Prüfergebnis mit einem Referenzprüfergebnis verglichen, das anhand eines durchgeführten Referenzprüfablaufs unter Verwendung eines Referenzmodells erhalten wurde, das unter Verwendung eines Referenzumfeldsignals und/oder eines Referenzprozesssignals und eines Referenzeinstiegssystems erzeugt wurde. Im Schritt 240 des Ausgebens wird ein Abweichungssignal an eine Kommunikationsschnittstelle zu einem Prüfer ausgegeben, wobei das Abweichungssignal dazu ausgebildet ist, um eine Abweichung zwischen dem Referenzeinstiegssystem und dem Einstiegssystem anzuzeigen, wenn im Schritt 235 des Vergleichens das Prüfergebnis und das Referenzprüfergebnis nicht innerhalb eines Toleranzbereichs übereinstimmen.

Die Schritte 205, 210, 215 des Einlesens und/oder Empfangens und Erzeugens werden gemäß einem Ausführungsbeispiel in einem vorbestimmten zeitlichen Intervall automatisch wiederholt.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### BEZUGSZEICHENLISTE

- DCU: Türsteuergerät

- 100: Vorrichtung zum Erstellen eines Modells zur Verwendung in einem Prüfablauf für ein Einstiegssystem für ein Fahrzeug
- 105: Modell
- 110: Einstiegssystem
- 115: Fahrzeug
- 120: Einleseeinrichtung
- 125: Erzeugungseinrichtung
- 130: Umfeldsignal
- 135: Prozesssignal

- 200: Verfahren zum Erstellen eines Modells zur Verwendung in einem Prüfablauf für ein Einstiegssystem für ein Fahrzeug
- 205: Schritt des Einlesens
- 210: Schritt des Empfangens
- 215: Schritt des Erzeugens
- 220: Schritt des Generierens
- 225: Schritt des Speicherns
- 230: Schritt des Durchführens
- 235: Schritt des Vergleichens
- 240: Schritt des Ausgebens

## Patentansprüche

1. Verfahren (200) zum Erstellen eines Modells (105) zur Verwendung in einem Prüfablauf für ein Einstiegssystem (110) für ein Fahrzeug (115), wobei das Verfahren (200) die folgenden Schritte umfasst:
Einlesen (205) eines Umfeldsignals (130), das eine Information über ein Umfeld des Einstiegssystems (110) repräsentiert; und/oder
Empfangen (210) eines Prozesssignals (135), das eine während eines Betriebs des Einstiegssystems (110) generierte Prozessinformation des Einstiegssystems (110) repräsentiert; und
Erzeugen (215) des Modells (105) unter Verwendung des Umfeldsignals (130) und/oder Prozesssignals (135).

2. Verfahren (200) gemäß Anspruch 1, mit einem Schritt (230) des Durchführens, in dem der Prüflauf des Einstiegssystems (110) unter Verwendung des im Schritt (215) des Erzeugens erzeugten Modells (105) durchgeführt wird, um ein Prüfergebnis zu erhalten.

3. Verfahren (200) gemäß Anspruch 2, mit einem Schritt (235) des Vergleichens, in dem das Prüfergebnis mit einem Referenzprüfergebnis verglichen wird, das anhand eines durchgeführten Referenzprüfablaufs unter Verwendung eines Referenzmodells erhalten wurde, das unter Verwendung eines Referenzumfeldsignals und/oder eines Referenzprozesssignals und eines Referenzeinstiegssystems und/oder Prozess- und Umfeldsignalen aus dem Betrieb erzeugt wurde.

4. Verfahren (200) gemäß Anspruch 3, mit einem Schritt (240) des Ausgebens, in dem ein Abweichungssignal an eine Kommunikationsschnittstelle zu einem Prüfer ausgegeben wird, wobei das Abweichungssignal dazu ausgebildet ist, um eine Abweichung zwischen dem Referenzeinstiegssystem und dem Einstiegssystem (110) anzuzeigen, wenn im Schritt (235) des Vergleichens das Prüfergebnis und das Referenzprüfergebnis nicht innerhalb eines Toleranzbereichs übereinstimmen.

5. Verfahren (200) gemäß einem der vorangegangenen Ansprüche, bei dem die Schritte (205, 210, 215) des Einlesens und/oder Empfangens und Erzeugens in einem vorbestimmten zeitlichen Intervall automatisch wiederholt werden.

6. Verfahren (200) gemäß einem der vorangegangenen Ansprüche, mit einem Schritt (220) des Generierens vor dem Schritt (210) des Empfangens, wobei im Schritt (220) des Generierens das Prozesssignal (135) unter Verwendung von gespeicherten Prozessinformationen generiert wird, die während eines Betriebs des Einstiegssystems (110) in einem definierten Umfeld sensierte und gespeicherte Prozessinformationen repräsentieren.

7. Verfahren (200) gemäß Anspruch 6, mit einem Schritt (225) des Speicherns vor dem Schritt (220) des Generierens, wobei im Schritt (225) des Speicherns sensierte Prozessinformationen während des Betriebs des Einstiegssystems (110) in dem definierten Umfeld des Einstiegssystems (110) auf einer nicht flüchtigen Speichereinrichtung gespeichert werden.

8. Vorrichtung (100), die eingerichtet ist, um die Schritte (205, 210, 215, 220, 225, 230, 235, 240) des Verfahrens (200) gemäß einem der vorangegangenen Ansprüche in entsprechenden Einheiten (DCU, 120, 125) auszuführen und/oder anzusteuern.

9. Computerprogramm, das dazu eingerichtet ist, das Verfahren (200) gemäß einem der Ansprüche 1 bis 7 auszuführen und/oder anzusteuern.

10. Maschinenlesbares Speichermedium, auf dem das Computerprogramm nach Anspruch 9 gespeichert ist.
